# EUROPEAN PATENT SPECIFICATION

(11) **EP 4 234 203 B1**
(45) Date of publication and mention of the grant of the patent: **14.08.2024**
(21) Application number: 22158667.0
(22) Date of filing: 24.02.2022
(51) Int. Cl.: B29C 45/16

(54) **TWO-COLOR INJECTION-MOLDED PRODUCT AND TWO-COLOR INJECTION MOLDING PROCESS**
ZWEIFARBIGES SPRITZGUSSPRODUKT UND ZWEI-FARBEN-SPRITZGIESSVERFAHREN
PRODUIT BICOLORE MOULÉ PAR INJECTION ET PROCÉDÉ DE MOULAGE PAR INJECTION BICOLORE

(43) Date of publication of application: 30.08.2023
(73) Proprietor: Schoeller Allibert GmbH, 19057 Schwerin (DE)
(72) Inventor: JURGENS, Albert, 7694 AH, Kloosterhaar (NL); WEVER, Carlos, 7556 SM, Hengelo (NL)
(74) Representative: Winter, Brandl - Partnerschaft mbB

(56) References cited:
- WO-A1-97/20674
- FR-A1- 2 868 044

## Description

### Background

### Technical Field

The present disclosure relates to an injection-moulded product of bi- or multicolour(ed) appearance, especially one displaying intermingling bi- or multi-toned streaks of and/or giving a visual impression of marble or wood. In particular, a bi- or multicoloured injection-moulded ,marble` plastic crate for storage and transport of beverage containers, such as glass bottles for beer or blow-moulded PET bottles for still or carbonized water, or a bi- or multicoloured injection-moulded so-called large transport container, and the like, is provided. Further, a respective method of manufacturing an injection-moulded product of bi- or multi-colour(ed) appearance is disclosed.

### State of the art

Injection-moulded products are well known to a number of rigid plastics industries and in various industrial and/or consumer fields / applications. For example, injection-moulded products are commonly used as plastic parts to the automotive industry as well as storage containers or other logistics equipment, such as beer kegs, beverage crates, pallets for warehousing and transportation of products, etc.

For the purpose of manufacturing bi- or multi-colour(ed) injection-moulded products, the methods of overmoulding and/or insertion moulding of at least two different thermoplastic (melt) components of different colours in a double- or multi-colour injection mould assembly have been generally known. For example, BR 200605744 A refers to a method for injection of thermoplastic parts with two different colours, or using two different materials by means of traditional injecting equipment of two or more injection cannons, by means of a single template. Said method is disclosed to allow the injection of two identical plastic materials or even of two different materials to be injected simultaneously, while at the same time preventing the occurrence of material contamination.

However, the mould design and/or the layout of the overmoulding and/or of the insertion moulding process is/are by far more complex, when compared to the injection moulding of a standard, i.e. mono-coloured, thermoplastic resin. Especially, for each colour required in the final product, a designated injection-moulding extruder including a separate feed is required, respectively. Hence, this results in disadvantageous bi- or multi-colour manufacturing costs.

Another disadvantage of bi- or multi-colour(ed) injection-moulded products, that are attained by overmoulding and/or insertion moulding based on at least two different thermoplastic materials / components, lies in the risk of delamination of/within the final product / plastic part, due to the occurrence of mechanical stress and/or shear forces in the course of a user application of the final product such as transport of heavy items. A known major cause for delamination occurring at/along an interface between the at least two different thermoplastic materials / components lies in an unsatisfactory interfacial connection before transitioning from the thermoplastic or molten state to a solidified state inside the injection mould. This is caused by a lack of interfacial coalescence of the two different thermoplastic materials / components and/or by an incomplete/insufficient material bond of these. Especially, upon injection of the at least two different thermoplastic materials / components in their melted state into the injection mould, especially from two different injection nozzles or paths, their at least two (outer) thermoplastic material melt fronts thermally solidify first, such that do not (fully) flow together / combine / coalesce at their interface. Hence, delamination is difficult to suppress.

Further, there are some older so-called ram-injection moulding machines that have a process with no extrusion screw, but just a heating chamber and a ram for injection. It is known that it is an uncontrollable drawback of this method that it produces undesired colourless / unpigmented streaks in part if colour is used. This disadvantage is due to the lack of efficient mixing, what regards a base material thermoplastic resin usually provided in the form of colourless pellets with a usually small percentage of colour pigment pellets added thereto in a feed zone. This lack of homogeneous, thorough colouring / pigmenting on the plastic part has previously been referred to as an undesirable "marbling" effect of unpigmented or very poorly pigmented / unshaded / untoned regions. In other words, these injection-moulded products often turn out to contain uncoloured regions or domains, remaining uninfluenced from mixing, therefore showing no specific colour at all and thus giving an impression of an inferior product quality to a product user or consumer. Further, due to the lack of mixing, the products attainable by this nowadays largely obsolete ram-injection moulding technology often show the prohibitive disadvantage of delamination of the final product. In addition, due to the lack of kneading elements in the ram-injection injection moulding machine / process, resulting in a disadvantageous separation of heating and flow, the necessary plasticizing is processed very poorly, resulting in regions where prohibitive degradation of the thermoplastic resin caused by overheating of stationary material regions occurs. Therefore, the product appearance, lifetime and mechanical strength are unsatisfactory up to insufficient. Moreover, due to the cycled manner of the injection unit process, production costs are too high.

FR 2 868 044 discloses a mono-coloured handling device, e.g. a pallet, with an integrally injection-moulded external antiskid area on its outside. Therein, the handling device / pallet, is made of a plastic material, comprising at least one contact part consisting of the external antiskid contact area and a rigid area. Therein the contact part is made of only one composite plastic material which consists of a mixture of at least one antiskid component having viscosity V1 at the injection temperature with a rigid component which is physico-chemically compatible with the antiskid component and has a viscosity V2 at the injection temperature and the viscosity V1 is less than the viscosity V2 in such a way that the antiskid component concentration in the external antiskid area is greater than the concentration thereof in the rigid area.

WO 97/20674 A1 discloses a method and device for producing a decorative injection moulding for visible plastics parts, in particular for use on motor vehicles, the device comprising a heated worm drive, into which the raw material is fed in granulated form via a metering device, is melted and further transported. The device further comprises a downstream clamping unit connected to an injection mould. At least two differently-coloured plastics granulates are poured into the metering device which feeds the individual differently-coloured plastics granulates in predetermined amounts and chronological sequence to the worm drive.

Consequently, there exists a need to overcome one or more of the disadvantages associated with the prior art of (manufacturing) bi- or multi-colour(ed) injection-moulded products.

### Summary of the disclosure

The present disclosure was made to solve the afore-mentioned technical problems existing in the prior art and to provide an injection-moulded product of bi- or multicolour(ed) appearance of high quality, especially in terms of customer appeal as well as mechanical strength in the application. Specifically, it is a technical object thereof to suppress delamination occurring in previous injection-moulded products of at least two thermoplastic components. Another object of the present disclosure is to provide a corresponding method of manufacturing / injection-moulding said injection-moulded product of bi- or multi-colour(ed) appearance which is robust according to potential influences of various input process parameters, yields a high throughput and is cost-effective.

Said object is solved by an injection-moulded product with the features of claim 1, or alternatively, with the features of claim 2 as well as by an injection-moulding for manufacturing said injection-moulded product with the features of the corresponding method claim. Advantageous further developments of the disclosure are subject matters of the dependent claims, respectively.

An injection-moulded product of bi- or multicoloured appearance according to a first aspect of the present disclosure comprises / has: a first thermoplastic component of a first colour (pigmented with/by a first colour pigmentation /masterbatch) that is a base colour, and at least one second thermoplastic component, of another second (second, third, fourth, etc.) colour (pigmented with/by another / a second, third, fourth, etc. colour pigmentation / masterbatch) that is different to the first colour (and/or first colour pigmentation / masterbatch). Thereby the injection-moulded product of bi- or multicoloured appearance has at least one unmixed, especially unblended, regional domain of only one, the first or the (at least one other) second, colour (pigmentation / masterbatch). Thereby, the at least one regional domain (or plurality of domains) is uncontaminated by the other (single or multiple) colour/s (pigmentation/s). Thereby, the at least one regional domain (or plurality of domains) is visually distinct from the other (single or multiple) colour/s (pigmentation/s). Thereby, the first thermoplastic component and the at least one second thermoplastic component are mutually mixable materials, when in their thermoplastic melted states. Thereby, the first thermoplastic component and the at least one second thermoplastic component are blendable and chemically compatible materials, when in their thermoplastic melted states.

It ought to be understood, that presently the one term "colour" should imply a visually distinct appearance to the eye in the sense of a tone / a shade / a hue, while the other, however closely related, term "pigment(ation)" is meant to relate to the material presence of a colourant.

Especially, the terms "another colour" / "different colours" may be understood with reference to various colour models and/or colour matching / reproduction systems as well known in the state of the art. For example, exemplary reference may be made in this context to the "Pantone Matching System ^{®}" (by Pantone LLC, Carlstadt, New Jersey, USA), which is a proprietary colour space used in a variety of industries, notably including plastics, and distinguishing between 2161 different colours / tones / shades / hues (as of the year 2019). However, presently it may be preferred that the different colours exhibit a strong colour contrast, for example by being complementary colours and/or colours contrasted by their lightness / darkness, respectively.

Especially, the term "colourant" / "pigment" means a substance / an additive that imparts the first and the second colour, such as black or white or a colour to the other materials, i.e. the thermoplastic component, and/or a substance that is or has been added or applied in order to change the initial / natural / inherent colouring of the thermoplastic material that is usually light / pale / "without any colour". Preferably, the colourant may be solid, especially in the form of powdered particles / agglomerates or compounded therefrom into (thermoplastic) coloured pellets of the thermoplastic (optionally, thermoplastic compound), creating a masterbatch material.

However, the colourant may also include a liquid or paste-like dye (concentrate) and the like. The pigment(s) used in the thermoplastic may be, respectively, insoluble organic and/or inorganic particles added to the first thermoplastic component and/or the at least one second thermoplastic component to give a specific first and/or respective second (second, third, fourth, etc.) colour thereto. The pigment(s) may be selected from one or more of the following pigment categories: organic pigments, inorganic pigments, carbon black, white pigments, special effect pigment, aluminum pigments, and combinations thereof. Especially, it may be preferred, that the pigment(s) is/are heat resistant in polyolefins (for example, according to standard norm EN 12877-2 Procedure A).

The term "(colour) masterbatch" thus refers to a solid or liquid colourant / additive for the respective first / second thermoplastic component, used for the colouring thereof. Especially, the (colour) masterbatch may be thermoplastic pellets in which pigments are optimally dispersed at high concentration in a carrier material. The carrier material is compatible with the main thermoplastic material in which it will be blended during extrusion / moulding. Thereby the respective first / second thermoplastic component obtains the colour from the colour masterbatch.

The first thermoplastic component may also be referred to as outer phase / matrix material. The at least one second thermoplastic component may also be referred to as inner phase / effect material. For the present disclosure, this technical terminology is derived and ought to be understood as within colloidal chemistry / interfacial physics, for example in the context of emulsions as liquid bi-/multi-phase systems. Also, this includes the technical term "domain" as used herein. The term "domain" thus relates to an island region / volumetric delta unit / droplet (as in a bi-/multi-phase-system). The regional domain may preferably be visually distinct; for example, the regional domain may preferably be of at least 1 mm width / size (with a characteristic / nominal length extending along at least one axis within a surface of the injection-moulded product), preferably of at least 5 mm width / size, especially of at least 10 mm width / size. The (plurality of) coloured regional domain(s) may be visually distinct as a (plurality of) coloured patch(es) / blob(s) / streak(s) / band(s) and the like. The (plurality of) coloured regional domain(s) may take various free forms (such as, for example, with an interface curve thereof alternatingly curved / being locally convex and locally concave), such as elongated and/or (quasi / near) round shape. The interfacial surface of the (plurality of) coloured regional domain(s) may be / appear (locally) smooth and/or frayed / streaked and the like. The plurality of coloured regional domain(s) may occur in swarm-like / concentrated arrangements thereof, for example as multiple streaks, especially extending in essentially the same direction.

The term of "mutually mixable materials (at thermoplastic melted states)" implies that the first thermoplastic component and the at least one second thermoplastic component are melt-extrudable together as an integral bi-/multi-phase system, that is, without the occurrence of any interfacial phase separation effects. This advantageously suppresses any delamination in the solidified final injection-moulded product.

Thereby, the first thermoplastic component and the at least one second thermoplastic component are blendable with each other and chemically compatible to each other. Especially, the term "blendable" can imply that a difference between respective so-called polymeric solubility parameter "Sp value" of the first thermoplastic component and the at least one second thermoplastic component may not be greater than 4.5 (cal/cc)^{1/2}, more preferably not greater than 1.0 (cal/cc)^{1/2}, especially not greater than 0.1 (cal/cc)^{1/2}. The polymeric solubility parameter (Sp value) is understood by the skilled person as a technical term and defined as the square root of the cohesion energy density (cal/cc) as taught in, for example, "Polymer Handbook, Chapter 4" (ed. by J. Brandrup et al; John Wiley & Sons, Inc., 1967).

Similarly, the technical term "chemically compatible" implies macromolecular considerations (such as non-polar and polar group, intensity of hydrogen bonds, etc). Especially, the first thermoplastic component and the at least one second thermoplastic component are presently considered as "chemically compatible" when they are selected from the same / identical polymer group.

For example, the first thermoplastic component and the at least one second thermoplastic component may both be selected from the group of polyolefins (i.e. polyalkenes; macromolecules formed by the polymerization of olefin / alkene monomer units), in particular polyethylene (PE) and polypropylene (PP); and derivatives and/or compounds /composites therof. However, it is also conceivable that the first thermoplastic component and/or the second thermoplastic component may be obtained from the same / identical thermoplastic polymer group (and copolymers, derivatives, composites / compounds thereof) including the following ones: polymethylmethacrylate (PMMA); acrylonitrile butadiene styrene (ABS); polyamides; acetal / polyacetal (POM / polyoxymethylene); polyphenylene sulfide (PPS); poly (alkylenes terephthalate), in particular polybutylene terephthalate (PBT); polyurethanes (PUR); and vinyl polymers, polyvinyl chloride (PVC); etc.

According to alternative claims 1 or 2, the first thermoplastic component is obtained from at least a base polymer selected from the group of polyethylenes (PE), in particular of high-density polyethylenes (HDPE); and derivatives and/or compounds thereof.

According to the present disclosure, the at least one second thermoplastic component is obtained from at least a base polymer selected from the group of polyethylenes (PE), in particular of high-density polyethylenes (HDPE); and derivatives and/or compounds thereof.

It could be found that hence the thermoplastic properties / machinability as well as the overall bi-/multicoloured appearance, especially a produced effect of artificial marble, as well as the mechanic strength / integrity under tensile loading (i.e. suppressed delamination) turned out to be extraordinarily advantageous.

Accordingly, in the case of polyethylene (PE), the polymeric Sp value of the, respectively, first or the (at least one) second thermoplastic component is ca. 8.0 (cal/cc)^{1/2}. Further, the thermophysical properties of high density polyethylene (HDPE) as a preferrred embodiment, are as follows:

| | |
|---|---|
| Density | 930 to 970 kg/m³, preferably ca. 940 kg/m³; |
| Melt density | 0.764 g/cm³; |
| Melting point | 110 to 140 °C, preferably ca. 130 to 136 °C, for example, 135 °C (homopolymer) or 110 - 134 °C (copolymer); and/or |
| Heat of fusion: | 245 kJ/kg (homopolymer) or 140 - 232 kJ/kg (copolymer). |

Thereby, the physical term "heat of fusion" is defined as the heat absorbed by a unit mass of a given solid at its melting point that completely converts the solid to a liquid at the same temperature, i.e. equal to the heat of solidification.

According to alternative claims 1 or 2, the at least one second thermoplastic component is obtained from at least a base polymer selected from the group of polypropylenes (PP); and derivatives and/or compounds thereof.

According to the present disclosure, the first thermoplastic component is obtained from at least a base polymer selected from the group of polypropylenes (PP); and derivatives and/or compounds thereof.

Accordingly, in the case of polypropylene (PP), the polymeric Sp value of the, respectively, first or (at least one) second thermoplastic component is ca. 7.9 (cal/cc)^{1/2}. Further, the thermophysical properties of polypropylene (PP) as another preferred embodiment, are as follows:

| | |
|---|---|
| Density | 904 to 908 kg/m³; |
| Melt density | 0.739 g/cm³; |
| Melting point | 156 to 210 °C, preferably ca. 160 to 170 °C, for example, 160 - 165 °C (homopolymer) or 135 - 159 °C (copolymer); and/or |
| Heat of fusion: | 88 kJ/kg. |

It could be experimentally found, that these preferred embodiments further improved a forestated advantageous effects, such as the thermoplastic properties / machinability; the overall bi-/multicoloured appearance (esp. effect of artificial marble; suppressed delamination).

Especially, in the case of high density polyethylene (HDPE) as one further preferrred embodiment for the first thermoplastic component, a specifically preferred first colour (esp. matrix colour) masterbatch may be made from a polyethylene (PE) carrier. Especially / in addition, the second pigment carrier may be polypropylene (PP), thus creating the marble effect.

Especially, in the case of polypropylene (PP) as another / alternative further preferrred embodiment for the first thermoplastic component, a specifically preferred first colour (esp. matrix colour) masterbatch may be made from a polypropylene (PP) carrier. Especially / in addition, the second pigment carrier may be high density polyethylene (HDPE), thus creating the marble effect.

Alternatively, or cumulatively, the first thermoplastic component has a high first Melt Flow Rate / MFR, in particular as determinable according to DIN EN ISO 1133, that is in a range of 15 to 50 g/10 min, preferably measured at 2.16 kg test load and, in the case of the group of polyethylenes (PE), at 190°C test temperature. Due to the accordingly low melt viscosity, the machinability / flow behaviour of the outer phase (more relevant thereto) is excellent, thereby suppressing thermal degradation, reducing injection pressure and positively improving the yield / cost situation.

Alternatively, or cumulatively, the at least one second thermoplastic component has a low second Melt Flow Rate / MFR, in particular as determinable according to DIN EN ISO 1133, that is in a range of 0.5 to 5.0 g/10 min, especially of 1.5 to 2.0 g/10 min, preferably measured at 2.16 kg test load and, in the case of the group of polypropylenes (PP), at 230°C test temperature. Due to the accordingly high melt viscosity of the inner phase, the domains of the at least one second thermoplastic component break up less easily in response to kneading / extrusion shear stress and thus remain large(r). Therefore, the second domains in the final injection-moulded product come out / are visually more distinct, for example in the size of several Millimeters, especially more than 1 cm. This preferred embodiment very favourably adds to the desired bi-/multicoloured appearance (esp. effect of artificial marble).

Alternatively, or cumulatively, the first thermoplastic component has a first melting point or melting point interval, as determinable by DSC (Differential Scanning Calorimetry according to DIN EN ISO 11357), that is in the temperature range of 110 to 140 °C, preferably ca. 130 to 136 °C. It is known that in thermoplastic polymer materials there is a fairly definite softening point that is observed when the thermal kinetic energy becomes high enough to allow internal polymer chain rotation to occur within the polymer chain bonds and to allow the individual polymer molecules to slide independently of their neighbours, thus rendering them more flexible and deformable. This defines the so-called glass transition temperature. Depending on the degree of polymer crystallinity, there will be a (slightly) higher temperature (interval), defining the melting point (interval), at which the polymeric crystalline regions come apart and the material becomes a viscous liquid melt of the thermoplastic polymer material (composition). According to aforesaid optional feature defining a (comparably) low first melting point (interval), the first thermoplastic component, especially in cases when it constitutes the major / highly-concentrated base component, begins to melt early on in an injection unit of an injection-moulding machine (assembly), i.e. in a feed hopper zone and/or in an initial zone of the extrusion screw (a first part of a heated barrel zone). This will positively result in a good flow behaviour of the thermoplastic material composition such that this can easily be extruded and/or injected into an injection mould to manufacture the injection-moulded product of bi- or multicoloured appearance as objects of various type, shapes and/or sizes. In addition, the injection pressures and/or cycle times can be positively reduced yielding lower investment and manufacturing costs.

Alternatively, or cumulatively, the at least one second thermoplastic component has a respective second melting point or melting point interval, as determinable by DSC (Differential Scanning Calorimetry according to DIN EN ISO 11357), that is in the temperature range of 156 to 210 °C, preferably ca. 160 to 170 °C.

Alternatively, or cumulatively, Injection-moulded product of bi- or multicoloured appearance according to any of the preceding claims, wherein the first melting point or melting point interval and the respective second melting point or melting point interval do not overlap, especially differ by a respective delta temperature of at least ca. 10 °C, preferably ca. 20 °C

Alternatively, or cumulatively, Injection-moulded product of bi- or multicoloured appearance according to any of the preceding claims, comprising the at least one second thermoplastic component with a respective second mass percentage in the range of 0.1 to 5 weight-%, preferably 2 to 3 weight-%. Thereby, the at least one second thermoplastic component is mixed and broken up as an inner phase of the bi-/multiphase-system wherein the first thermoplastic component is the outer phase thereof.

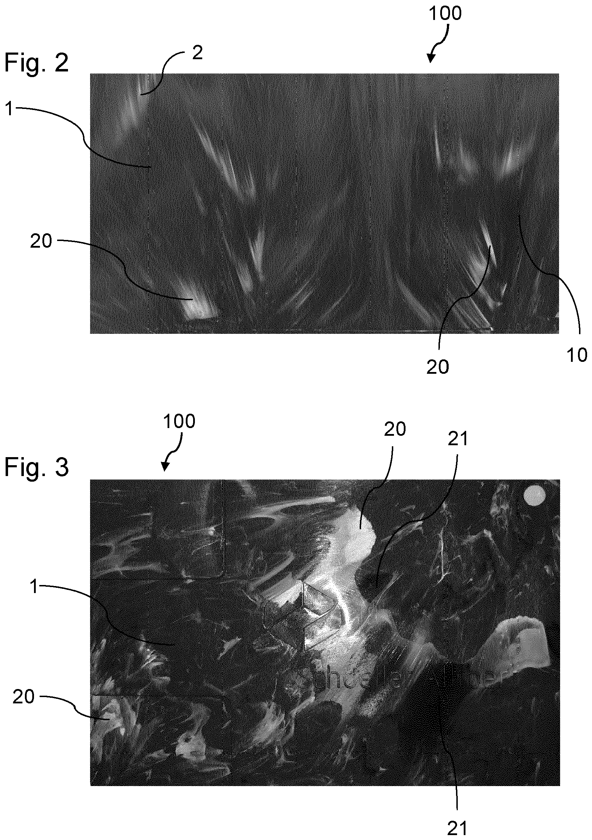

Especially, within said preferred embodiment (but not in any way limited thereto) it is conceivable to provide more than one / two or more / multiple second thermoplastic component. For example, reference may be made here to Figure 3 showing, as an example, a tri-coloured injection-moulded marble-effect product wherein the first thermoplastic component is an essentially outer phase of ocean blue (i.e. in the black&white reproduction: anthracite) as first colour, the injection-moulded marble-effect product further comprising two separate second thermoplastic components as two essentially inner phases of white as well as of black constituting two different second colours.

Alternatively, or cumulatively, the injection-moulded product of bi- or multicoloured appearance does not comprise any plasticizers (or at least: does essentially not comprise any plasticizers, i.e. less than 0.1 weight-%, more preferably less than 0.01 weight-%, even more preferably only trace amounts less than 10 ppm). Plasticizers are understood to be additives compounded into thermoplastic materials to render them more flexible by acting as 'lubricants' between the polymer chains, thereby lowering the glass transition temperature / melting point (interval). However, it has been found that the (optional) absence of stabilizers may have a further positive effect on what regards the present disclosure. One advantage lies in the further optimized material strength properties and/or absence of delamination issues that can be observed. The applicant assumes that this may be explained, in the macroscopic context of kneading of viscous liquids / melts and shear forces occurring along the interfacial regional domain surfaces, by an absence of slipping / slippage. In addition, the absence of (diffusible) plasticizers in the final product can be positive under considerations of material longevity and/or of the environment.

Alternatively, or cumulatively, the appearance is one of artificial marble or artificial wood. In some situations, it may be preferred that the pigment(s) used in the thermoplastic component(s) may be organic in nature; due to the then low dispersibility / tendency of forming agglomerates /clumps of pigment particles which may add visually observable irregularities such as (tiny) spots and specks, freckles, squirts, splashes, spots to further enhance the heterogeneity of the colour appearance. Hence, a marble-effect resembling the visual vividness of natural stones is further improved. Alternatively, or cumulatively, it may be preferred that the pigment(s) used in the thermoplastic component(s) may be inorganic pigments such as metal oxides (e.g. titanium dioxide) and sulphides, carbon black, etc. This yields the advantage of a good dispersibility whereby manufacturing aspects such as the overall machinability, the robustness of the manufacturing process and the resulting good product yield rate are improved resulting in reduced costs.

Alternatively, or cumulatively, the injection-moulded product of bi- or multicoloured appearance is a container, pallet, crate and/or peg for storage and/or transportation of goods. This is specifically appealing in the field of consumer products such as beverages.

Alternatively, or cumulatively, the first thermoplastic component and the at least one second thermoplastic component contains at least 90 % of a recycled material. Alternatively, or cumulatively, the first thermoplastic component and the at least one second thermoplastic component contains at least 5 % of a maritime material. Such preferred embodiments are eco-friendly and more sustainable.

Alternatively, or cumulatively, the injection-moulded product of bi- or multicoloured appearance is delamination-proof / delamination-free. Especially, one or more of the following material strength parameters or test values apply (without any delamination occurring in respective test probes / samples of the injection-moulded product):
- Young's Modulus value of at least 800 MPA;
- yield strength value of at least 20 MPa;
- yield strain value of at least 10 %;
- elongation value of at least 250 %;
- Charpy V-notch impact test value of at least 6 kJ/m².
Thereby, the determination methods relating to afore-mentioned material strength parameters are well known in the prior art. Accordingly, the term "delamination-free" marking a distinguished technical advantage of the present disclosure can be easily quantified. In other words, breaking surface lines induced in test samples of the presently disclosed injection-moulded product of bi- or multicoloured appearance and occurring due to material failure caused by said determination methods will, essentially, cross bi- or multicoloured interfaces and not (only) follow along the interfaces (as it does in the case of delamination, cf. the prior art discussion in the introductory part of the present disclosure).

According to a second aspect of the disclosure a method of manufacturing / injection-moulding the injection-moulded product of bi- or multicoloured appearance according to the first aspect of the disclosure is provided. The method of manufacturing / injection-moulding includes the following process steps:
- feeding, within an initial feed hopper zone of an injection moulding machine, the first thermoplastic component and the at least one second thermoplastic component, respectively, into at least one feed hopper to attain a thermoplastic material composition;
- extruding the thermoplastic material composition continuously, within a heated barrel zone extending between the feed hopper zone and an injection nozzle of the injection moulding machine, by means and along a longitudinally extending extrusion screw to be mixed and plasticized into its molten state;
- injection-moulding, within an injection mould zone, the mixed and plasticized thermoplastic material composition, through the injection nozzle into an injection mould, in a timely cycled manner; and
- solidification into the final injection-moulded product by cooling of the injection mould and subsequent unloading, in a timely cycled manner.

It ought to be noted, that technical features as well as the technical effects and advantages thereof, as have been described above in relation to the first aspect of the present disclosure of the injection-moulded product of bi- or multicoloured appearance will equally (mutatis mutandis) be applicable to / valid for this second aspect of the disclosure of the corresponding method of manufacturing / injection-moulding and vice versa. Hence, repetition may be avoided.

Thereby, said method of manufacturing / injection-moulding is processed / implemented on the injection-moulding machine (assembly) including an injection unit and a clamping unit, being (esp. directly following) downstream of the injection unit. On the one hand, the injection unit comprises the feed hopper zone and the (heated) barrel zone, being (esp. directly following) downstream of the feed hopper zone. On the other hand, the clamping unit, which will be described in detail below, comprises the injection mould zone. Especially, the injection mould zone may comprise a so-called hot-runner zone located at an entrance flow region of the injection mould that is downstream / adjacent to the injection nozzle.

The heated barrel zone provides a barrel that is a hollow chamber in which the (at least one) extrusion screw (also referred to as: reciprocating injection screw) operates. The extrusion screw / reciprocating screw is a screw capable of both rotational and axial movement. Thereto, the injection-moulding machine (assembly), includes a motor and gears for screw rotation and/or a cylinder for screw ram, which may be arranged upstream to the feed hopper zone. The extrusion screw, arranged within a heated barrel zone of the injection unit, is configured to combine heating and mixing with the function of injection. In a preferred single-screw-extruder embodiment using one extrusion screw, the barrel has a cylindrical cross-section. Alternatively, in another preferred double-screw-extruder embodiment using two extrusion screws, the barrel has a figure-eight-cross-section. The barrel, within the heated barrel zone, is heated by at least one heater arranged to provide a temperature profile (extending along a longitudinal barrel axis / extrusion screw axis).

Within the feed hopper zone, the injection unit includes at least one feed hopper. Into the at least one feed hopper and/or within the feed hopper zone the first thermoplastic component and the at least one second thermoplastic component are fed, especially in the form of solid thermoplastic /polymer pellets. Especially, in order to manufacture a multicoloured injection-moulded product, (a) further second thermoplastic component(s) that is/are a third, fourth, etc. thermoplastic component(s) may be fed. Thereby, a thermoplastic material composition is (pre-)mixed from the first thermoplastic component and the at least one second thermoplastic component. Feeding may be especially be attained by means of (a) so-called feeding screw(s) / barrels extruder(s). Moreover, within the feed hopper zone, the dry blending of the fed materials (the first and the at least one second thermoplastic components and/or of the masterbatches) plays a roll. Therein, preferably, a pellet size, a pellet length and/or a dosage thereof may be (a) key process parameter(s) of the manufacturing method.

For example, alternatively, or cumulatively, the first thermoplastic component may be provided / fed in first (average) pellet size around ca. 3 mm; and/or the at least one second thermoplastic component may be provided / fed in first (average) pellet size around ca. 3 mm or, in a preferred / optional embodiment, around ca. 6 mm (yielding an enhanced / better visually distinguishable regional domain size). However, this is not limiting, and the skilled person understands that the feed hopper may be fed with thermoplastics (resins) or compounds in various forms. In other words, the (respective) feeds may be fine powder, regrind / recycled material or virgin pellets, compound pellets; or a mixture thereof. Especially, the first thermoplastic component and the at least one second thermoplastic component may share one common feed hopper. However, the method is not limited to one common feed hopper; and it is also thinkable to provide two (bi-colour) or, respectively, a plurality (multi-colour) of separate feed hoppers, especially such that each of the first thermoplastic component and the at least one / plurality of second thermoplastic component(s) are fed into the (upstream / initial part of the) injection-moulding machine separately.

Thereby, it is preferred to (optionally) control the ratio(s) of the first thermoplastic component and the at least one second thermoplastic component within the thermoplastic material composition to maintain a consistent injection-moulding machine operation and steady-state, superior final product quality / surface appearance. For certain embodiments in the latter case of the provision of a ratio control, it is conceivable that optionally said ratio(s) may fluctuate and/or represent a (respective) time-dependent function, in order to, for example, tailor the attainable optical appearance of the final injection-moulded product.

Then, the solid plastic pellets / thermoplastic material composition fed from the feed hopper(s) is/are conveyed to transit into (a first part of) the heated barrel zone. There they are compressed, especially by a change in screw geometry. This compression forces the solid plastic pellets / thermoplastic material composition to melt / plasticize through the action of pushing up against each other. In addition, or rather: in superposition, the imposed temperature profile within the heated barrel zone causes the thermoplastic material composition to melt. In particular, it is the extrusion screw(s) and the (heated) barrel, which are configured, especially interact, to convey, mix, and to generate pressure on thermoplastic material composition within the extruder in order to melt / plasticize.

Thereby, the injection unit is configured to feed (batch-wise or preferably continuously or quasi- / semi-continuously), prepare / plasticize (continuously or quasi- / semi-continuously), and dose the thermoplastic material composition, i.e. a two- or multi-component resin / thermoplastic polymer (pre-)mix, which especially may be consistently and accurately performed. Further, the injection unit is configured to then inject, in a cycled manner, a set volume of the plasticized thermoplastic material composition at a high injection pressure (e.g. 80 bar and up to much higher, such as 100 to 160 bar, dependant on the mould size and injection flow channels, the rheology, etc.) into the mould (tool). Herein, the (technical) term "to plasticize thermoplastic material" means to make the thermoplastic material capable of being injection-moulded.

Thereby, according to the present disclosure, the thermoplastic material composition is processed in such a way that a respective (melt flow) viscosity of each of the extruder-mixed first thermoplastic component and the at least one second thermoplastic component are such, at the point of the injection nozzle and/or within the injection mould-zone, especially the hot runner zone, that resulting kneading effects (i.e. interfacial shear-stress effects on/around intra-bulkmaterial regional domains) have caused sufficient inter-mixing of these (such that delamination is prevented or essentiall suppressed), but however have been insufficiently achieved with respect to producing a (visually) uniform thermoplastic material composition. Especially, it is preferred that the selection of the first thermoplastic component and/or of the at least one second thermoplastic component and/or of various processing parameters of the injection-moulding method may be such as to cause the second (melt flow) viscosity of the at least one second thermoplastic component (especially, when being considered as an inner phase of a bi-/multi phase thermoplastic material composition) to be (significantly) lower than the first (melt flow) viscosity of the first thermoplastic component (especially, when being considered as the outer phase, essentially or at least partially enclosing the inner phase).

Following / downstream of the injection unit, the clamping unit of the injection-moulding machine (assembly), that includes the injection mould zone, comprises (at least one) injection mould. The injection mould is arranged / mounted between a stationary platen and a movable platen by means of (e.g. four) peripheral tie rods, as well as a clamping cylinder and a hydraulic cylinder, which are an arrangement configured / provided to move the movable platen. However, the skilled person will understand, the gist of the present disclosure lies within the technical effects taking place within the injection unit. Especially, it is of importance that the feature defining the at least one unmixed, especially unblended, regional domain of only the first or second colour, especially of the second colour (i.e. the inner phase), wherein further preferably the regional domain is uncontaminated by and/or visually distinct from the other colour, ought to be attained within the thermoplastic material composition at (the longitudinal points of) the injection nozzle and/or within the hot runner zone (corresponding to a respective injection-moulding process time). Consequently, any clamping unit known in the prior art may be used equally. In fact, the present disclosure is not in any way limited to a certain type of the injection unit and/or of the clamping unit as these may by varied, according to the size, complexity and/or scale of the final injection-moulded product and/or in dependence of the availability of a (historically developed) injection-moulding machine park.

Alternatively, or cumulatively, the heated barrel zone provides a process temperature profile that is higher than both the first and the second melting points. This results in high throughputs and supresses fluctuations negatively affecting the machinability. In addition, this enables a favourably longer tool life (extrusion screw and/or injection mould), due to a reduction of melt flow viscosities and resulting injection pressures.
Alternatively, or cumulatively, the heated barrel zone provides a process temperature profile that is set to be in a first part of the heated barrel zone at a first temperature range of 160 to 165 °C. Alternatively, or cumulatively, the heated barrel zone provides a process temperature profile that is in a middle part of the heated barrel zone at a second temperature range of 165 to 175 °C. Alternatively, or cumulatively, the heated barrel zone provides a process temperature profile that is in a last part of the heated barrel zone / at the injection nozzle at a third temperature range of 175 to 195 °C. Especially, but not in any way limiting, it has been found, that this (partial) temperature profile or such a combination of (partial) temperature profiles is especially advantageous to create visually attractive marble-effects in non-delaminating injection-moulded products that are based on the first thermoplastic component being selected from the group of polyethylenes (PE) (and the like) and/or on the at least one second thermoplastic component being selected from the group of polypropylenes (PP) (and the like). Alternatively, or cumulatively, this (partial) temperature profile or such a combination of (partial) temperature profiles may be employed for injection-moulded products according to the present disclosure wherein the first thermoplastic component has a first melting point (interval) within the temperature range of 110 to 140 °C, preferably ca. 130 to 136 °C; and/or wherein the at least one second thermoplastic component has a respective second melting point (interval) within the temperature range of 156 to 210 °C, preferably ca. 160 to 170 °C. These features cause different interfacial effects to take place within the heated barrel zone. Especially, mixing and the presently disclosed non-mixing of the first and especially the second colour masterbatch takes place within the heated barrel zone. In other words, dependent on the temperature profile / curve, be it partial or along the whole barrel, the marble-effect or marble-like effect can be influenced and tailor-made according to customer / user preferences without compromising the mechanic strength / the product requirement of avoided delamination.

Alternatively, or cumulatively, the heated barrel zone provides a process temperature profile that includes a temperature maximum within a hot runner zone that is included within the injection mould zone, especially being provided within an initial flow path region. This serves a short residence time of maximum heat application / exposure. That is, in order to optimize the rheologic behaviour within the injection mould by a further decreased (melt flow) viscosity, the maximum heat is imposed just where this specifically matters (esp., within the initial flow path region), thus without negatively affecting the thermoplastic material composition due to degradation caused by overheating / longer residence times at the heat maximum. Preferably, the hot runner zone is set to be heated to a fourth temperature range of 180 to 215 °C, preferably ca. 185 to 195 °C. As a result, the injection cycle time is advantageously reduced further, yielding optimal production costs and reduced maintenance. Alternatively, or cumulatively, the injection speed may be predetermined at 2.5 seconds injection cycle time resulting in improved production costs.

Alternatively, or cumulatively, the extrusion screw may be configured to provide a short (initial / upstream) mixing zone, with the mixing zone length extending maximally up to ca. 30 %, especially up to ca. 20 %, of the total extrusion screw length (i.e. in longitudinal direction of the injection extruder machine). Alternatively, or cumulatively, the extrusion screw may be a barrier-type extrusion screw. Such (a) preferable, optional extrusion screw design(s) advantageously enable(s) low melt temperatures or temperature profiles along the extrusion screw as well as heterogeneity of the injected melt or, respectively, of the final injection-moulded product. While on the one hand, the first thermoplastic component and the at least one second thermoplastic component need to be mixed to a certain extent in the (initial / upstream) mixing zone, it has been found that the desired bi- or multi-colour(ed) appearance can be optimally attained by such an optional extrusion screw design. That is, the at least one unmixed, especially unblended, regional domain of only the first or second colour remains larger and/or more (visually) distinct, the shorter the mixing zone. Vice versa, the longer and/or the more stagnating the mixing zone, the more will the first thermoplastic component and the at least one second thermoplastic component mix or blend such that their colours will fade in each other, due to the physical effect of subtractive colour mixing. Therefore, this / these preferable, optional extrusion screw design(s) advantageously yield a highoutput and, at the same time, high-quality manufacturing / injection-moulding method / final product.

Preferably, the barrier-type extrusion screw design may include and/or be based on one or more of the three basic designs commonly known by their inventors' names, namely the so-called Maillefer barrier screw design, Schippers barrier screw design, and Dray barrier screw design; or combinations thereof. Firstly, the Maillefer barrier screw design relating to patent document CH 363149 A [the disclosure thereof being incorporated herewith by reference] discloses a barrier flight that retains unmelted solids in a primary channel while melted resin goes downstream in an auxiliary channel. Secondly, the Schippers barrier screw design relating to patent document DE 2017580 A1 [the disclosure thereof being incorporated herewith by reference] provides two different configurations: The first has parallel channels with the primary or entry channel reducing in depth while the auxiliary or melt channel (on the other side of the barrier flight) increases in depth. The second configuration adds distributive mixing by transposing the primary and the auxiliary flights. This causes the resin in the melt channel to mix with the resin on the trailing side of the primary channel. Thirdly, the Dray barrier screw design relating to patent document US 3,650,652 A [the disclosure thereof being incorporated herewith by reference] discloses to provide a longer lead at the end of the feed section for increasing the melting area. The longer lead allows the auxiliary channel to be included, while the width of the solids bed in the primary channel remains unchanged.

Hence, the present disclosure provides a novel and innovative injection-moulding technology development to create a bicoloured (or multicoloured) appearance, especially a marble-effect or marble-like effect in an injection-moulded product. Thereby, the thermoplastic composition thereof comprises the first thermoplastic component / masterbatch of the first colour (base colour), and one (or multiple) second thermoplastic component(s) of another colour that is different to the first colour (of multiple other second colours that are different to the first colour and mutually different / distinct from one another). The bi- or multicoloured appearance means that there is at least one unmixed, especially unblended, regional domain of only the first or second colour. Especially, the injection-moulded product may appear to be made out of (artifical) marble or wood, inspite of its thermoplastic make / manufacturing origin from an injection-moulding process.

As a key advantage, the injection-moulded product according to the present disclosure is mechanically strong. Especially - significantly unlike previously known multi-colour injection-moulded articles - it does not suffer from detrimental delamination. Therefore it can be fully used for storage and/or transport applications, vehicle interior equipment, and the like. The superiority of the provided bi-/multicoloured injection-moulded in terms of mechanic strength and durability is founded, for one reason, in the technical feature according to which the first thermoplastic component and the at least one second thermoplastic component are mutually mixable, especially blendable and/or chemically compatible, materials, when in their thermoplastic melted states. This condition from interfacial as well as molecular chemistry / material science is especially met for the preferred embodiment wherein both (or all of) the first and (at least one) second thermoplastic components / masterbatches are (selected from / based on) the group of polyolefins. In other words, the presently disclosed development moves away from conventional injection-moulding of chemically non-compatible mixtures of thermoplastic polymers (especially from non-polyolefin mixtures). For another reason, the good quality of the presently disclosed bi-/multicoloured injection-moulded product is founded in /caused by the optimized processing and chemical product design according to the provided injection-moulding method and the preferred embodiments thereof. Last but not least, the possibility of manufacturing bi-/multicoloured products by means of the presently disclosed injection-moulding method instead of, for example conventional casting methods or traditional manual fabrication, enables an automated, cost-effectice production of recyclable products.

The foregoing and other objects, features, aspects and advantages of the present disclosure will become more apparent from the following detailed description of the present disclosure when taken in conjunction with the accompanying drawings.

### Brief description of the drawings

Features, advantages, and technical and industrial significance of exemplary embodiments of the invention will be described below with reference to the accompanying drawings, in which like signs denote like elements, and wherein:

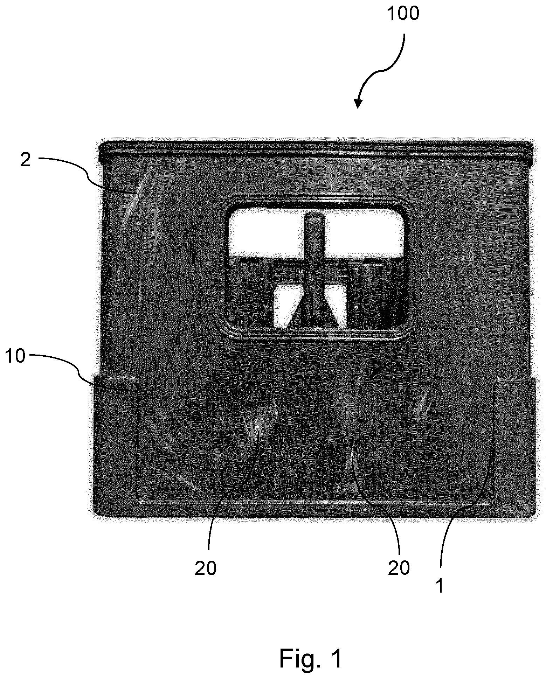

Fig. 1 is a photograph showing an injection-moulded product of bicoloured appearance according to a first embodiment that is injection-moulded into the shape of a beverage crate;
Fig. 2 is a photograph showing a further injection-moulded product of bicoloured appearance according to a second embodiment that is injection-moulded into the shape of a standard test sample for manufacturing engineering development (MED) purposes, whereby other influence parameters are identical to the ones relating to the first embodiment in Fig. 1;
Fig. 3 is a photograph showing a further injection-moulded product of tri-coloured appearance according to a third embodiment that is a further standard test sample for MED purposes;

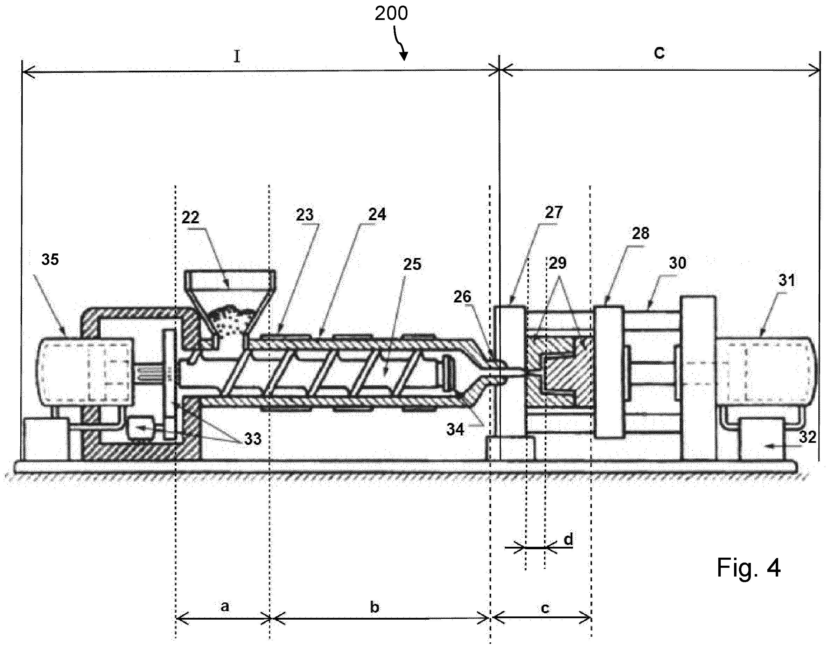

Fig. 4 is a schematic diagram illustrating a configuration of an injection-moulding machine (assembly) that is configured to process a corresponding method for manufacturing of the injection-moulded product of bi- or multicoloured appearance according to the disclosure, illustrating four different injection-moulding process zones;

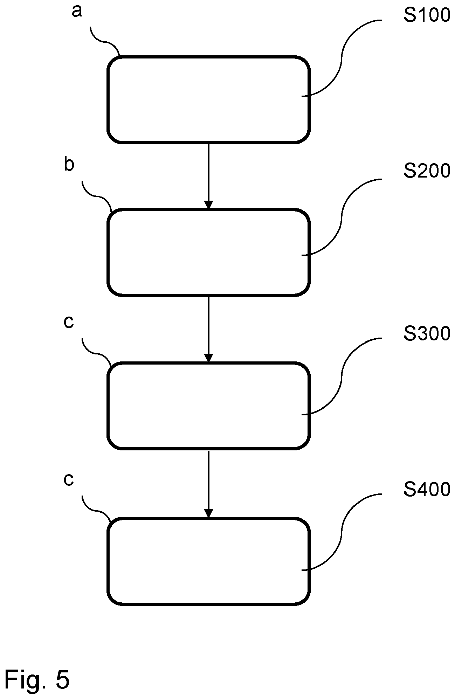

Fig. 5 is a flowchart of the method for manufacturing of the injection-moulded product of bi- or multicoloured appearance following the four different injection-moulding process zones as illustrated in Fig. 4;

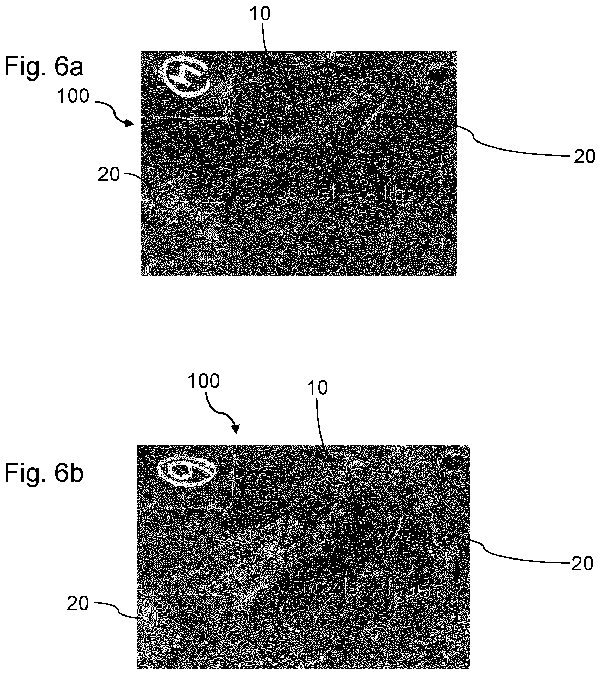

Fig. 6a and Fig. 6b are photographs showing further injection-moulded products of bicoloured appearance according to a fourth ("no. 4") and a fifth embodiment ("no. 6"), respectively, that are further standard test samples for MED purposes, illustrating the effect of an experimental variation regarding the second Melt Flow Rate of the at least one second thermoplastic component;

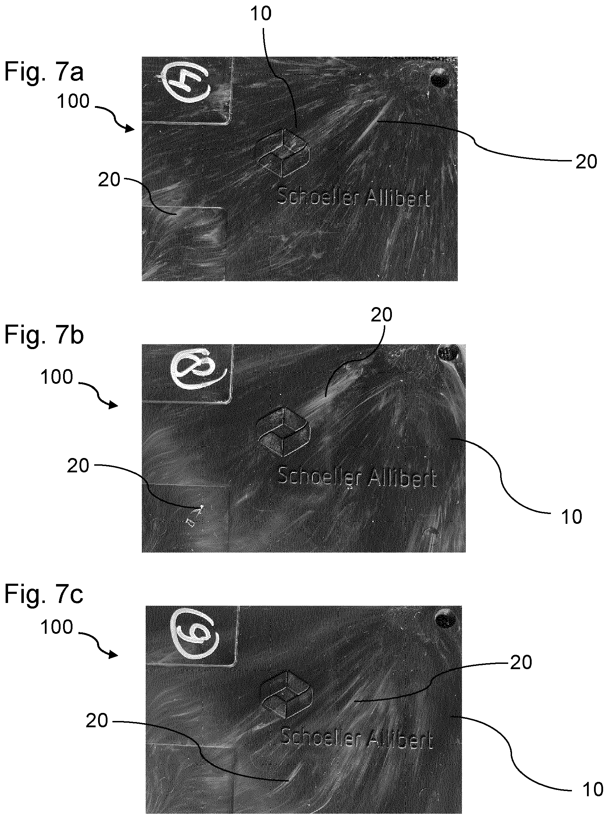

Fig. 7a, 7b and Fig. 7c are photographs showing further injection-moulded products of bicoloured appearance according to the fourth embodiment ("no. 4", cf. Fig 6a idem) as well as to a sixth ("no. 8") and seventh ("no. 9") embodiment, respectively, that are further standard test samples for MED development purposes, illustrating the effect of an experimental variation regarding different processing temperature ranges; and

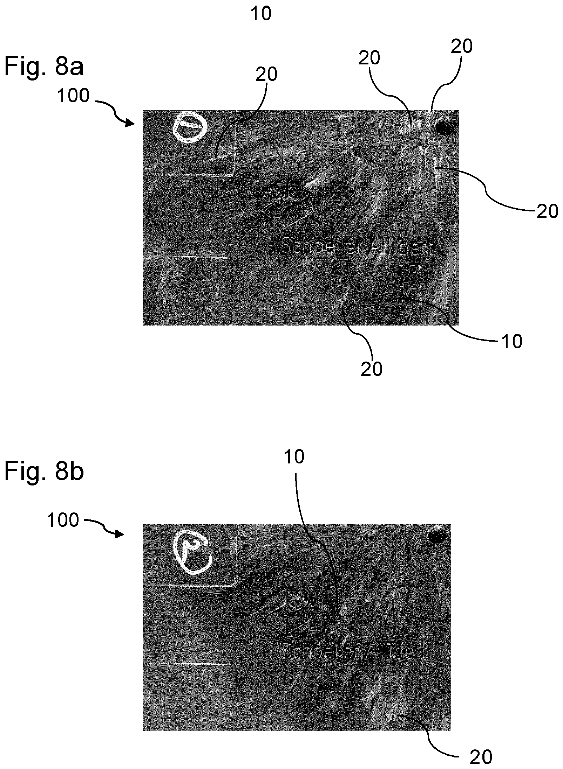

Fig. 8a and Fig. 8b are photographs showing further injection-moulded products of bicoloured appearance according to an eigth ("no. 1") and a ninth ("no. 2") embodiment, respectively, that are further standard test samples for MED purposes, illustrating the effect of an experimental variation regarding the feed pellet size / diameter of the at least one second thermoplastic component.

### Detailed description of embodiments

Features, advantages, and technical and industrial significance of exemplary embodiments of the invention will be described below with reference to the accompanying drawings, in which like signs denote like elements, and wherein:
Fig. 1 is a photograph showing an injection-moulded "marble-look" beverage crate 100 as an injection-moulded product of bicoloured appearance according to a first embodiment. The mechanically robust "marble-look" beverage / beer crate 100 of Fig. 1 resembles a final consumer product to be used for storage and transportation. The exemplary beverage / beer crate 100 of Fig. 1 has a width of 400 mm and a height of 270 mm.

Figures 2, 3, 6a/6b, 7a/7b/7c, 8a/8b are respective photographs each showing a different standard test sample for manufacturing engineering development (MED) purposes 100 that resembles a further injection-moulded product of bicoloured appearance (Fig. 3: of tricoloured appearance) according to a second to ninth embodiment, respectively. Each standard test sample (for MED) has a width of 100 mm and a height of 50 mm as well as a thickness (not shown) of 4 mm.

Each of the first to ninth embodiments of the injection-moulded product of bi-/multicoloured appearance 100 as shown in Figures 1, 2, 3, 6a/6b, 7a/7b/7c, 8a/8b include high-density polyethylene (HDPE) as a first thermoplastic component and polypropylene (PP) as the at least one second thermoplastic component. Therefore, they may be seen as an experimental series / design of experiments to observe the influence of certain parameters by comparison among one another, as will be detailed in the following.

By way of example / optionally, the high density polyethylene (HDPE) as the first thermoplastic component (base / outer phase) has been coloured with a first colour masterbatch made from PE (or PE copolymers / derivatives etc.) material as a first pigment carrier. Herein, the first colour 1 is ocean blue (i.e. in the black&white reproduction: anthracite), as indicated in each of the first to ninth embodiments of the injection-moulded product of bi-/multicoloured appearance 100 shown in Figures 1, 2, 3, 6a/6b, 7a/7b/7c, 8a/8b. Accordingly, the regional domains of the first colour 10 and/or a surrounding outer phase / matrix phase of the first thermoplastic component 1 (in the present case of a high percentage of the first thermoplastic component 1, more than 90 weight-%) can be recognized / identified by their ocean blue (i.e. in the black&white reproduction: anthracite) colour.

By way of another example / optionally, the polypropylene as the (at least one) second thermoplastic component (effect / inner phase) has been coloured with (at least one) second colour masterbatch may from PP (or PP copolymers / derivatives etc.) material as a (at least one) second pigment carrier. Herein, the second colour 2 is white (or, in addition, black, cf. Fig. 3), as indicated in each of the first to ninth embodiments of the injection-moulded product of bi-/multicoloured appearance 100 shown in Figures 1, 2, 3, 6a/6b, 7a/7b/7c, 8a/8b. Accordingly, the regional domains of the second colour 20 can be recognized / identified by their white colour.

The standard test sample (for MED) 100 of the second embodiment / Fig. 2 is essentially comparable to the beverage / beer crate 100 of the first embodiment / Fig. 1, insofar as other influence parameters besides the shape and size thereof may be considered as essentially identical or at least negligibly different. In consequence, the bicoloured appearance of the second embodiment / Fig. 2, exhibiting multiple featherlike white streaks 20 as the regional domains of the second colour 2, makes the impression of an enlarged detail of the photograph of the first embodiment / Fig. 1, while, in fact, it is not, but the two different objects of the larger crate versus the smaller standard test sample (for MED).

Figure 3 relating to the third embodiment is unique [in comparison to the first, second and fourth to ninth embodiments the injection-moulded product of bicoloured appearance 100 as shown in Figures 1, 2, 6a/6b, 7a/7b/7c, 8a/8b] in sofar as it gives an example of the injection-moulded product being of a tricoloured appearance / showing a marble-effect of altogether three distinctive colours ocean blue (anthracite) / white / black. That is, the tricoloured appearance / marble-effect is produced as follows: the highly concentrated first thermoplastic component 1 is an essentially surrounding / outer phase of ocean blue (i.e. in the black&white reproduction: anthracite) as the first colour, injection-moulded together with two (separate) second thermoplastic components 2 as two (essentially separate) inner phases of white as well as of black constituting two different second colours 2. As a result, the tricoloured appearance / marble-effect is created by visually distinct regional domains / patches / blobs / streaks that are ocean blue (i.e. in the black&white reproduction: anthracite) domains of the first colour 10 as well as inner white domains 20 of one second colour plus inner black domains 21 of (another) second colour (i.e. of a third colour).

According to the especially intended product use relating to storage and transportation, each of the first to ninth embodiments as shown in Figures 1, 2, 3, 6a/6b, 7a/7b/7c, 8a/8b underwent application test procedures, respectively, conducted to guarantee a respective mechanical strength / robustness and durability for each of the embodiments, at least for the time duration of a typical product life cycle / shelf-life. Thereby, for all of therefore-mentioned first to ninth embodiments it could be demonstrated / proven that these do not exhibit / undergo any delamination under static and/or dynamic mechanic stress, such as tensile loading. Instead, observable material breakdown occurs across the whole (bulk / interfaces) of the injection-moulded product. In other words, each material of the first to ninth embodiments proves to behave / react / perform like an integral thermoplastic blend made from two or mor thermoplastic polymers. Therefore, each of these embodiments can be considered "delamination-free" in the sense of the current disclosure.

For example, for the first embodiment (beer crate) and the second embodiment (standard test sample for MED, that resembles a detail of the first embodiment), the following test results were determined (according to the standard DIN test procedures known to the skilled person):

| | |
|---|---|
| Young's Modulus (MPa) | 1015 |
| Yield strength (MPa) | 23.8 |
| Yield strain (%) | 11 |
| Elongation (%) | 337 |
| Charpy Notched Impact (kJ/m²) | 7.0 |

Fig. 4 shows a schematic diagram illustrating a preferred embodiment or a principal configuration of an injection-moulding machine (assembly) 200. The injection-moulding machine (assembly) 200 is configured to process / implement, as illustrated by a flowchart of corresponding Fig. 5, a corresponding method for manufacturing of the injection-moulded product of bi- or multicoloured appearance 100 according to the disclosure. Thereto, the injection-moulding machine (assembly) 200 includes an injection unit I and a clamping unit C, as indicated by the double arrows in the upper part of Fig. 4. The clamping unit C is situated (esp. directly following) downstream of the injection unit I.

Furthermore, the injection-moulding machine (assembly) 200 includes four different injection-moulding process zones (designated by reference numerals a to d), as indicated by the double arrows in the bottom part of Fig. 4. Moreover, three out of these four different injection-moulding process zones (i.e. a to c) are designated to four fundamental method steps S100 to S400 as distinguished by the flowchart of corresponding Fig. 5.

The injection unit I, on the left side of Fig. 4, comprises an initial feed hopper zone a and a (heated) barrel zone b, the latter being situated (esp. directly following) downstream of the feed hopper zone a. The clamping unit C, on the right side of Fig. 4, comprises an injection mould zone c. The injection mould zone c includes an injection mould 29 (having male and female mould halves) and, upstream thereof, an injectionnozzle 26. The injection nozzle 26 is provided at the downstream end of the heated barrel 24. As can be seen in Fig. 4, the injection mould zone c comprises an optional, so-called hot-runner zone d. The hot-runner zone d is located at an entrance flow region of the injection mould 29.

The feed hopper zone a is configured such that feeding (step S100 of Fig. 5), especially dry mixing, of the respective (thermoplastic) materials (respective matrix materials and corresponding masterbatches) / first and second thermoplastic components takes place (in a preferably continouus process).

Then / downstream, the barrel zone b is configured such that heating and extrusion (step S200 of Fig. 5) for plastizing / mixing (and partial non-mixing of remaining domains, according to the present disclosure) of the respective (thermoplastic) materials (respective matrix materials and corresponding masterbatches) / first and second thermoplastic components takes place.

Then / downstream, the injection mould zone c is configured such that the injection-moulding step (step S300 of Fig. 5) takes place whereby a melted composition of / with the first and second thermoplastic components is injected through the injection nozzle 26 into the injection mould 29 (in its closed state), in a timely cycled manner. In addition, a nonreturn valve 34 is provided to prevent back-flow of the melted composition.

As can further be seen in Fig. 4,the injection mould 29 is arranged between a stationary platen 27 and a movable platen 28. By (e.g. horizontal) movement of the movable platen 28 the male mould halve can be moved into the corresponding female mould halve and out of it, in a timely cycled manner (each time for method steps S300 and S400, cf. Fig. 5), to close and open the injection mould 29. This is accomplished by the provision of, e.g. four, tie rods 30, clamping cylinder 31 and hydraulic cylinder 32.

Within the injection-moulding step (S300, cf. Fig. 5), the optional hot-runner zone d is configured to further heat up, especially by intensive heating / heat transfer and/or for a comparably short injection time / residence time (in order to avoid thermal degradation), the melted composition of / with the first and second thermoplastic components of the injection mould 29, for example by a hot runner temperature at ca. 215 °C and/or for 2.5 seconds injection time. Afterwards, the injection mould 29 is cooled such that solidification (step S400 of Fig. 5) into the final injection-moulded product and subsequent unloading thereof takes place, in a timely cycled manner.

As can further be seen in Fig. 4, the injection unit I includes a feed hopper 22, thereby defining the feed hopper zone a. Into the feed hopper 22 the first thermoplastic component and the at least one second thermoplastic component are fed, especially in the form of solid thermoplastic / polymer pellets.

Then, the heated barrel zone b provides a barrel 24 heated e.g. from the outside by multiple circumferentially arranged heaters 23. The barrel 24 is a hollow chamber in which the (at least one) extrusion screw 25 (also referred to as: reciprocating injection screw) operates. The barrel 24 is heated by at least one heater 23 arranged to provide a temperature profile (extending along a longitudinal barrel axis / extrusion screw axis).The extrusion screw / reciprocating screw 24 is a screw capable of both rotational and axial movement. Thereto, the injection-moulding machine (assembly) 200 includes a motor / gears for screw rotation 33 and a cylinder for screw ram 35, arranged upstream of the feed hopper zone a. The extrusion screw 25, arranged within the heated barrel zone b of the injection unit I, is configured to combine heating and mixing with the function of injection. In a one preferred single-screw-extruder embodiment of the extrusion screw / reciprocating screw 25 that uses one / a single extrusion screw 25, the barrel 24 has a cylindrical cross-section. Alternatively, in another preferred double-screw-extruder embodiment of the extrusion screw / reciprocating screw 25 that uses two extrusion screws 25, the barrel 24 has a figure-eight cross-section.

Coming back to the series / design of experiments as afore-mentioned in the context of the previous discussion of Figures 1, 2, 3, 6a/6b, 7a/7b/7c, 8a/8b, each of Figures 6a to 8b shows, respectively, the standard test sample (for MED) 100 according to the variation of the following embodiments, as now to be further discussed:
Fig. 6a and Fig. 6b relate to standard test samples 100 according to a fourth ("no. 4") and a fifth embodiment ("no. 6"), respectively, thereby illustrating the effect of an experimental variation regarding the second Melt Flow Rate (MFR) of the at least one second thermoplastic component. That is, the fourth embodiment ("no. 4" / Fig. 6a) is manufactured based on the second Melt Flow Rate (MFR) being 0.5 g/10 min, measured at 2.16 kg test load and at 230°C test temperature (determined according to DIN EN ISO 1133, group of polypropylenes). Contrary to this, the fifth embodiment ("no. 6" / Fig. 6b) is manufactured based on the second Melt Flow Rate (MFR) being 2.0 g/10 min, likewise measured at 2.16 kg test load and at 230°C test temperature. From the comparison of Figures 6a vs. 6b it can be concluded that the higher the second MFR, i.e. the lower the second melt viscosity, the easier the white second thermoplastic component (masterbatch) mixes with the surrounding blue first thermoplastic component (masterbatch). This conclusion is made, since from the overall bicoloured appearance of the fifth embodiment ("no. 6" / Fig. 6b) it seems that the "ocean blue" (b/w: anthracite) is lighter than for the fourth embodiment ("no. 4" / Fig. 6a). In other words, the higher the second MFR, i.e. the lower second melt viscosity, disperses better and easier, resulting in (more) mixing with the blue masterbatch.

Fig. 7a, 7b and Fig. 7c are photographs showing further bicoloured standard test samples 100 according to the fourth embodiment ("no. 4", cf. Fig 6a idem) as well as to a sixth ("no. 8") and seventh ("no. 9") embodiment, respectively, that are further standard test samples (for MED) development purposes, illustrating the effect of an experimental variation regarding different processing temperature ranges, herein especially the effect of different melt composition / mass temperatures. Thereby, as previously explained, injection-moulding process influence parameters comprise the injection speed, an injection temperature, a melt composition / mass temperature average, the temperature profile within the heated barrel zone (all afore-mentioned temperature ranges), and the hotrunner temperature.

That is, the fourth embodiment ("no. 4", Fig. 7a, cf. Fig 6a idem) is manufactured at a temperature of 185°C to 195°C. The sixth embodiment ("no. 8", Fig. 7b) is manufactured at a temperature of 195°C to 205°C. The seventh embodiment ("no. 9", Fig. 7c) is manufactured at a temperature of 210°C - 220°C. Hence, it is concluded that with increase in temperature, the marble-effect / the non-mixing of the inner second thermoplastic component ("effect masterbatch") gets disturbed through the heated extrusion mixing. In other words, the hotter the more mixes the inner phase / second thermoplastic component ("effect masterbatch") with the outer phase / matrix material / first thermoplastic component. The marble-effect, as defined by the appearance of the first and second regional domains 10, 20, becomes 'less' sharply defined / distinguishable and more faded / gradient.

Fig. 8a and Fig. 8b are photographs showing further bicoloured standard test samples 100 according to the eigth ("no. 1") and the ninth ("no. 2") embodiment, respectively, illustrating the effect of an experimental variation regarding the feed pellet size / diameter of the at least one second thermoplastic component. That is, the eight embodiment ("no. 1", Fig. 8a) is manufactured based on a "triple in size" pellet size. The ninth embodiment ("no. 2", Fig. 8b) is manufactured based on a standard pellet size (ca. 3 mm). As defined by the appearance of the first and second regional domains 10, 20, it may be concluded that the larger the pellet size, the more colourant / pigment amount there is to create the desired marble-effect visually standing out from the outer phase / matrix material / first thermoplastic component. That is, then the effect of the colourants / pigments is comparably larger.

### List of Reference Numerals

- 1: first thermoplastic component
- 2: second thermoplastic component
- 10: domain of first colour
- 20: domain of (one) second colour
- 21: domain of (another) second colour (i.e. of a third colour)
- 22: feed hopper
- 23: heaters
- 24: barrel
- 25: extrusion screw (reciprocating)
- 26: injection nozzle
- 27: stationary platen
- 28: movable platen
- 29: injection mould
- 30: tie rods
- 31: clamping cylinder
- 32: hydraulic cylinder
- 33: motor and gears for screw rotation
- 34: nonreturn valve
- 35: cylinder for screw-ram
- 100: injection-moulded product of bi- or multicoloured appearance
- 200: injection-moulding machine
- a: feed hopper zone
- b: barrel zone
- c: injection mould zone
- d: hot runner zone
- C: clamping unit
- I: injection unit
- S100 - S400: process steps of the injection-moulding method

## Claims

1. Injection-moulded product (100) of bi- or multicoloured appearance, comprising:
- a first thermoplastic component (1) of a first colour that is a base colour, wherein the first thermoplastic component (1) is pigmented with a first colour masterbatch, and
- at least one second thermoplastic component (2) of another colour that is different to the first colour, wherein the at least one second thermoplastic component (2) is pigmented with another colour masterbatch,
wherein the injection-moulded product (100) of bi- or multicoloured appearance has at least one unmixed, especially unblended, regional domain (10, 20) of only the first or second colour, the domain (10, 20) being uncontaminated by and visually distinct from the other colour,
**characterized in that**
the first thermoplastic component (1) and the at least one second thermoplastic (2) component are mutually mixable, blendable and chemically compatible materials, when in their thermoplastic melted states;
the first thermoplastic component (1) is obtained from at least a base polymer selected from the group of polyethylenes (PE), in particular of high-density polyethylenes (HDPE); and derivatives and/or compounds therof;
the at least one second thermoplastic component (2) is obtained from at least a base polymer selected from the group of polypropylenes (PP); and derivatives and/or compounds thereof;
the first thermoplastic component (1) has a high first Melt Flow Rate / MFR, determinable according to DIN EN ISO 1133, that is in a range of 15 to 50 g/10 min, measured at 2.16 kg test load and, in the case of the group of polyethylenes (PE), at 190°C test temperature; and
the at least one second thermoplastic component (2) has a low second Melt Flow Rate / MFR, determinable according to DIN EN ISO 1133, that is in a range of 0.5 to 5.0 g/10 min, especially of 1.5 to 2.0 g/10 min, measured at 2.16 kg test load and, in the case of the group of polypropylenes (PP), at 230°C test temperature.

2. Injection-moulded product (100) of bi- or multicoloured appearance, comprising:
- a first thermoplastic component (1) of a first colour that is a base colour, wherein the first thermoplastic component (1) is pigmented with a first colour masterbatch, and
- at least one second thermoplastic component (2) of another colour that is different to the first colour, wherein the at least one second thermoplastic component (2) is pigmented with another colour masterbatch,
wherein the injection-moulded product (100) of bi- or multicoloured appearance has at least one unmixed, especially unblended, regional domain (10, 20) of only the first or second colour, the domain (10, 20) being uncontaminated by and visually distinct from the other colour,
**characterized in that**
the first thermoplastic component (1) and the at least one second thermoplastic (2) component are mutually mixable, blendable and chemically compatible materials, when in their thermoplastic melted states;
the first thermoplastic component (1) is obtained from at least a base polymer selected from the group of polyethylenes (PE), in particular of high-density polyethylenes (HDPE); and derivatives and/or compounds therof;
the at least one second thermoplastic component (2) is obtained from at least a base polymer selected from the group of polypropylenes (PP); and derivatives and/or compounds thereof;
the first thermoplastic component (1) has a first melting point or melting point interval, as determinable by DSC (Differential Scanning Calorimetry according to DIN EN ISO 11357), that is in the temperature range of 110 to 140 °C, preferably ca. 130 to 136 °C; and
the at least one second thermoplastic component (2) has a respective second melting point or melting point interval, as determinable by DSC (Differential Scanning Calorimetry according to DIN EN ISO 11357), that is in the temperature range of 156 to 210 °C, preferably ca. 160 to 170 °C.

3. Injection-moulded product (100) of bi- or multicoloured appearance according to claim 1 or 2, wherein the first melting point or melting point interval and the respective second melting point or melting point interval do not overlap, especially differ by a respective delta melting point temperature of at least ca. 10 °C, preferably ca. 20 °C.

4. Injection-moulded product (100) of bi- or multicoloured appearance according to any of the preceding claims, comprising the at least one second thermoplastic component (2) with a, respective, second mass percentage in the range of 0.1 to 5 weight-%, preferably 2 to 3 weight-%.

5. Injection-moulded product (100) of bi- or multicoloured appearance according to any of the preceding claims, not comprising any plasticizers.

6. Injection-moulded product (100) of bi- or multicoloured appearance according to any of the preceding claims, wherein, for creating the appearance as one of artificial marble or of artificial wood:
the first thermoplastic component is high density polyethylene (HDPE) and a masterbatch of the first colour is made from a polyethylene (PE) pigment carrier and the second colour is made from a polypropylene (PP) pigment carrier; or
a masterbatch of the colour for the polypropylene (PP) group thermoplastic component is made from a polypropylene (PP) pigment carrier and the other colour for the polyethylene (PE) group thermoplastic component is made from a high density polyethylene (HDPE) pigment carrier.

7. Injection-moulded product (100) of bi- or multicoloured appearance according to any of the preceding claims, wherein the injection-moulded product (100) is a small or large size container, pallet, crate and/or peg for storage and/or transportation of goods.

8. Injection-moulded product (100) of bi- or multicoloured appearance according to any of the preceding claims, wherein the first thermoplastic component (1) and/or the at least one second thermoplastic component (2) contains:
at least 90 % of a recycled material; and/or
at least 5 % of a maritime material.

9. Injection-moulded product (100) of bi- or multicoloured appearance according to any of the preceding claims **characterized by** being delamination-proof, especially wherein one or more of the following material strength parameters or test values apply:
- Young's Modulus value of at least 800 MPA;
- yield strength value of at least 20 MPa;
- yield strain value of at least 10 %;
- elongation value of at least 250 %;
- Charpy V-notch impact test value of at least 6 kJ/m².

10. Method of manufacturing the injection-moulded product (100) of bi- or multicoloured appearance according to any of the preceding claims 1 to 9, comprising the following steps:
- feeding (S100), within an initial feed hopper zone (a) of an injection moulding machine, the first thermoplastic component (1) and the at least one second thermoplastic component (2), respectively, into at least one feed hopper (22) to attain a thermoplastic material composition;
- extruding (S200) the thermoplastic material composition continuously, within a heated barrel zone (b) extending between the feed hopper zone (a) and an injection nozzle (26) of the injection moulding machine (200), by means and along a longitudinally extending extrusion screw (25) to be mixed and plasticized into its molten state;
- injection-moulding (S300), within an injection mould zone (c), the mixed and plasticized thermoplastic material composition, through the injection nozzle (26) into an injection mould (29), in a timely cycled manner; and
- solidification (S400) into the final injection-moulded product (100) by cooling of the injection mould (29) and subsequent unloading, in a timely cycled manner.

11. Method of manufacturing according to the preceding claim 10, wherein the heated barrel zone (b) provides a process temperature profile according to one or more of the following features wherein the process temperature profile:
- is higher than both the first and the second melting points;
- is set to be in a first part of the heated barrel zone (b) at a first temperature range of 160 to 165 °C and/or in a middle part of the heated barrel zone (b) at a second temperature range of 165 to 175 °C, and/or in a last part of the heated barrel zone (b) at a third temperature range of 175 to 195 °C;
- includes a temperature maximum within a hot runner zone (d) that is included within the injection mould zone (c), preferably set at a fourth temperature range of 185 to 195 °C.

12. Method of manufacturing according to claim 10 or 11, wherein the extrusion screw (25) is:
- configured to provide a short mixing zone, with the mixing zone length extending maximally up to ca. 30 %, especially up to ca. 20 %, of the total extrusion screw length; and/or
- a barrier-type extrusion screw.

## Patentansprüche

1. Spritzgegossenes Produkt (100) mit zwei- oder mehrfarbigem Aussehen mit:
einer ersten thermoplastischen Komponente (1) mit einer ersten Farbe, die eine Grundfarbe ist, wobei die erste thermoplastische Komponente (1) mit einem ersten Farbmasterbatch pigmentiert ist, und
zumindest einer zweiten thermoplastischen Komponente (2) mit einer anderen Farbe, die unterschiedlich zu der ersten Farbe ist, wobei die zumindest eine zweite thermoplastische Komponente (2) mit einem anderen Farbmasterbatch pigmentiert ist,
wobei das spritzgegossene Produkt (100) mit zwei- oder mehrfarbigem Aussehen zumindest eine ungemischte, insbesondere undurchmischte, örtliche Domäne (10, 20) nur der ersten oder zweiten Farbe aufweist, wobei die Domäne (10, 20) durch die andere Farbe nicht verunreinigt und von dieser visuell verschieden ist,
**dadurch gekennzeichnet, dass**
die erste thermoplastische Komponente (1) und die zumindest eine zweite thermoplastische Komponente (2), wenn in ihren thermoplastischen Schmelzzuständen, miteinander mischbare, durchmischbare und chemisch kompatible Materialien sind;
die erste thermoplastische Komponente (1) aus zumindest einem Basispolymer, ausgewählt aus der Gruppe Polyethylene (PE), insbesondere Polyethylene hoher Dichte (HDPE); und deren Derivaten und/oder Zusammensetzungen, erhalten ist;
die zumindest eine zweite thermoplastische Komponente (2) aus zumindest einem Basispolymer, ausgewählt aus der Gruppe Polypropylene (PP); und deren Derivaten und/oder Zusammensetzungen, erhalten ist;
die erste thermoplastische Komponente (1) eine hohe erste Schmelzflussrate / MFR, bestimmbar nach DIN EN ISO 1133, die in einem Bereich von 15 bis 50 g/10 min liegt, gemessen bei 2,16 kg Prüflast und, im Falle der Gruppe Polyethylene (PE), bei 190°C Prüftemperatur, aufweist; und
die zumindest eine zweite thermoplastische Komponente (2) eine niedrige zweite Melt Flow Rate / MFR, bestimmbar nach DIN EN ISO 1133, die in einem Bereich von 0,5 bis 5,0 g/10 min, insbesondere von 1,5 bis 2,0 g/10 min, liegt, gemessen bei 2,16 kg Prüflast und, im Falle der Gruppe Polypropylene (PP), bei 230°C Prüftemperatur, aufweist.

2. Spritzgegossenes Produkt (100) mit zwei- oder mehrfarbigem Aussehen mit:
einer ersten thermoplastischen Komponente (1) mit einer ersten Farbe, die eine Grundfarbe ist, wobei die erste thermoplastische Komponente (1) mit einem ersten Farbmasterbatch pigmentiert ist, und
zumindest einer zweiten thermoplastischen Komponente (2) mit einer anderen Farbe, die unterschiedlich zu der ersten Farbe ist, wobei die zumindest eine zweite thermoplastische Komponente (2) mit einem anderen Farbmasterbatch pigmentiert ist,
wobei das spritzgegossene Produkt (100) mit zwei- oder mehrfarbigem Aussehen zumindest eine ungemischte, insbesondere undurchmischte, örtliche Domäne (10, 20) nur der ersten oder zweiten Farbe aufweist, wobei die Domäne (10, 20) durch die andere Farbe nicht verunreinigt und von dieser visuell verschieden ist,
**dadurch gekennzeichnet, dass**
die erste thermoplastische Komponente (1) und die zumindest eine zweite thermoplastische Komponente (2), wenn in ihren thermoplastischen Schmelzzuständen, miteinander mischbare, durchmischbare und chemisch kompatible Materialien sind;
die erste thermoplastische Komponente (1) aus zumindest einem Basispolymer, ausgewählt aus der Gruppe Polyethylene (PE), insbesondere Polyethylene hoher Dichte (HDPE); und deren Derivaten und/oder Zusammensetzungen, erhalten ist;
die zumindest eine zweite thermoplastische Komponente (2) aus zumindest einem Basispolymer, ausgewählt aus der Gruppe Polypropylene (PP); und deren Derivaten und/oder Zusammensetzungen, erhalten ist;
die erste thermoplastische Komponente (1) einen ersten Schmelzpunkt bzw. ein erstes Schmelzpunktintervall, bestimmbar mittels DSC (Dynamischer Differenzkalorimetrie nach DIN EN ISO 11357), der bzw. das im Temperaturbereich von 110 bis 140 °C, vorzugsweise ca. 130 bis 136 °C liegt, aufweist; und
die zumindest eine zweite thermoplastische Komponente (2) einen jeweiligen zweiten Schmelzpunkt bzw. ein jeweiliges zweites Schmelzpunktintervall, bestimmbar mittels DSC (Dynamischer Differenzkalorimetrie nach DIN EN ISO 11357), der bzw. das im Temperaturbereich von 156 bis 210 °C, vorzugsweise ca. 160 bis 170 °C liegt, aufweist.

3. Spritzgegossenes Produkt (100) mit zwei- oder mehrfarbigem Aussehen nach Anspruch 1 oder 2, wobei der erste Schmelzpunkt bzw. das erste Schmelzpunktintervall und der jeweilige zweite Schmelzpunkt bzw. das jeweilige zweite Schmelzpunktintervall sich nicht überlappen, insbesondere sich um eine jeweilige Delta-Schmelzpunkttemperatur von zumindest ca. 10 °C, vorzugsweise ca. 20 °C, unterscheiden.

4. Spritzgegossenes Produkt (100) mit zwei- oder mehrfarbigem Aussehen nach einem der vorhergehenden Ansprüche, das die zumindest eine zweite thermoplastische Komponente (2) mit einem, jeweiligen, zweiten Massenanteil im Bereich von 0,1 bis 5 Gew.-%, vorzugsweise 2 bis 3 Gew.-%, aufweist.

5. Spritzgegossenes Produkt (100) mit zwei- oder mehrfarbigem Aussehen nach einem der vorhergehenden Ansprüche, das keine Weichmacher aufweist.

6. Spritzgegossenes Produkt (100) mit zwei- oder mehrfarbigem Aussehen nach einem der vorhergehenden Ansprüche, wobei, zur Schaffung des Aussehens als einem von künstlichem Marmor oder von künstlichem Holz:
die erste thermoplastische Komponente Polyethylen hoher Dichte (HDPE) ist und ein Masterbatch der ersten Farbe aus einem Polyethylen (PE)-Pigmentträger hergestellt ist und die zweite Farbe aus einem Polypropylen (PP)-Pigmentträger hergestellt ist; oder
ein Masterbatch der Farbe für die Polypropylen (PP)-Gruppe-thermoplastische-Komponente aus einem Polypropylen (PP)-Pigmentträger hergestellt ist und die andere Farbe für die Polyethylen (PE)-Gruppe-thermoplastische-Komponente aus einem Polyethylen-hoher-Dichte (HDPE)-Pigmentträger hergestellt ist.

7. Spritzgegossenes Produkt (100) mit zwei- oder mehrfarbigem Aussehen nach einem der vorhergehenden Ansprüche, wobei das spritzgegossene Produkt (100) ein klein- oder groß-formatiger Behälter, eine Palette, ein Kasten und/oder eine Volumeneinheit zur Lagerung und/oder zum Transport von Waren ist.

8. Spritzgegossenes Produkt (100) mit zwei- oder mehrfarbigem Aussehen nach einem der vorhergehenden Ansprüche, wobei die erste thermoplastische Komponente (1) und/oder die zumindest eine zweite thermoplastische Komponente (2) enthält:
zumindest 90 % eines rezyklierten Materials; und/oder
zumindest 5 % eines maritimen Materials.

9. Spritzgegossenes Produkt (100) mit zwei- oder mehrfarbigem Aussehen nach einem der vorhergehenden Ansprüche, **dadurch gekennzeichnet, dass** es delaminationsfest ist, insbesondere wobei einer oder mehrere der folgenden Materialfestigkeits-Parameter oder Prüfwerte gelten:
Elastizitätsmodul-Wert von zumindest 800 MPa;
Streckfestigkeitswert von zumindest 20 MPa;
Streckdehnungswert von zumindest 10 %;
Dehnungswert von zumindest 250 %;
Wert der Kerbschlagbiegeprüfung nach Charpy von zumindest 6 kJ/m2.

10. Verfahren zur Herstellung des spritzgegossenen Produkts (100) mit zwei- oder mehrfarbigem Aussehen nach einem der vorhergehenden Ansprüche 1 bis 9, umfassend die folgenden Schritte:
Zuführen (S100), innerhalb einer anfänglichen Zuführtrichter-Zone (a) einer Spritzgießmaschine, jeweilig der ersten thermoplastischen Komponente (1) und der zumindest einen zweiten thermoplastischen Komponente (2) in zumindest einen Zuführtrichter (22), um eine thermoplastische Materialzusammensetzung zu erhalten;
Extrudieren (S200) der thermoplastischen Materialzusammensetzung kontinuierlich, innerhalb einer Heizlauf-Zone (b), die sich zwischen der Zuführtrichter-Zone (a) und einer Einspritzdüse (26) der Spritzgießmaschine (200) erstreckt, mittels und entlang einer sich längsgerichtet erstreckenden Extrusionsschnecke (25), um gemischt und in ihren geschmolzenen Zustand plastifiziert zu sein;
Spritzgießen (S300), innerhalb einer Spritzgussform-Zone (c), der gemischten und plastifizierten thermoplastischen Materialzusammensetzung, durch die Einspritzdüse (26) in eine Spritzgussform (29), in einer zeitlich getakteten Weise; und
Verfestigung (S400) in das fertige spritzgegossene Produkt (100) durch Abkühlen der Spritzgussform (29) und anschließende Entnahme, in einer zeitlich getakteten Weise.

11. Verfahren zur Herstellung nach dem vorhergehenden Anspruch 10, wobei die Heizlauf-Zone (b) ein Prozesstemperaturprofil gemäß einem oder mehreren der folgenden Merkmale vorsieht, wobei das Prozesstemperaturprofil:
höher als sowohl der erste Schmelzpunkt als auch der zweite Schmelzpunkt ist;
eingestellt ist, um in einem ersten Teil der Heizlauf-Zone (b) auf einem ersten Temperaturbereich von 160 bis 165 °C und/oder in einem mittleren Teil der Heizlauf-Zone (b) auf einem zweiten Temperaturbereich von 165 bis 175 °C und/oder in einem letzten Teil der Heizlauf-Zone (b) auf einem dritten Temperaturbereich von 175 bis 195 °C zu sein;
ein Temperaturmaximum innerhalb einer Heißkanal-Zone (d), die sich innerhalb der Spritzgussform-Zone (c) befindet, aufweist, vorzugsweise eingestellt auf einen vierten Temperaturbereich von 185 bis 195 °C.

12. Verfahren zur Herstellung nach Anspruch 10 oder 11, wobei die Extrusionsschnecke (25):
eingerichtet ist, um eine kurze Mischzone vorzusehen, wobei die Mischzonenlänge maximal bis zu ca. 30 %, insbesondere bis zu ca. 20 %, der gesamten Extrusionsschneckenlänge beträgt; und/oder
eine Extrusionsschnecke vom Typ Barriereschnecke ist.

## Revendications

1. Produit moulé par injection (100) d'aspect bicolore ou multicolore, comprenant :
- un premier composant thermoplastique (1) d'une première couleur qui est une couleur de base, dans lequel le premier composant thermoplastique (1) est pigmenté avec un mélange maître d'une première couleur, et
- au moins un second composant thermoplastique (2) d'une autre couleur qui est différente de la première couleur, dans lequel le au moins un second composant thermoplastique (2) est pigmenté avec un mélange maître d'une autre couleur,
dans lequel le produit moulé par injection (100) d'aspect bicolore ou multicolore présente au moins un domaine régional (10, 20) non mixte, notamment non mélangé, de seulement la première ou la seconde couleur, le domaine (10, 20) n'étant pas contaminé par l'autre couleur et étant visuellement distinct de cette dernière,
**caractérisé en ce que**
le premier composant thermoplastique (1) et le au moins un second composant thermoplastique (2) sont des matériaux pouvant être mixés, mélangés ensemble et chimiquement compatibles, lorsqu'ils sont dans leurs états thermoplastiques fondus ;
le premier composant thermoplastique (1) est obtenu à partir d'au moins un polymère de base choisi dans le groupe de polyéthylènes (PE), en particulier de polyéthylènes haute densité (HDPE) ; et de dérivés et/ou composés de ceux-ci ;
le au moins un second composant thermoplastique (2) est obtenu à partir d'au moins un polymère de base choisi dans le groupe de polypropylènes (PP) ; et de dérivés et/ou composés de ceux-ci ;
le premier composant thermoplastique (1) présente un premier indice de fusion / MFR élevé, pouvant être déterminé selon DIN EN ISO 1133, qui est dans une plage de 15 à 50 g/10 min, mesuré à une charge d'essai de 2,16 kg et, dans le cas du groupe de polyéthylènes (PE), à une température d'essai de 190 °C ; et
le au moins un second composant thermoplastique (2) présente un second indice de fusion / MFR faible, pouvant être déterminé selon DIN EN ISO 1133, qui est dans une plage de 0,5 à 5,0 g/10 min, notamment de 1,5 à 2,0 g/10 min, mesuré à une charge d'essai de 2,16 kg et, dans le cas du groupe de polypropylènes (PP), à une température d'essai de 230 °C.

2. Produit moulé par injection (100) d'aspect bicolore ou multicolore, comprenant :
- un premier composant thermoplastique (1) d'une première couleur qui est une couleur de base, dans lequel le premier composant thermoplastique (1) est pigmenté avec un mélange maître d'une première couleur, et
- au moins un second composant thermoplastique (2) d'une autre couleur qui est différente de la première couleur, dans lequel le au moins un second composant thermoplastique (2) est pigmenté avec un mélange maître d'une autre couleur,
dans lequel le produit moulé par injection (100) d'aspect bicolore ou multicolore présente au moins un domaine régional (10, 20) non mixte, notamment non mélangé, de seulement la première ou la seconde couleur, le domaine (10, 20) n'étant pas contaminé par l'autre couleur et étant visuellement distinct de cette dernière,
**caractérisé en ce que**
le premier composant thermoplastique (1) et le au moins un second composant thermoplastique (2) sont des matériaux pouvant être mixés, mélangés ensemble et chimiquement compatibles, lorsqu'ils sont dans leurs états thermoplastiques fondus ;
le premier composant thermoplastique (1) est obtenu à partir d'au moins un polymère de base choisi dans le groupe de polyéthylènes (PE), en particulier de polyéthylènes haute densité (HDPE) ; et de dérivés et/ou composés de ceux-ci ;
le au moins un second composant thermoplastique (2) est obtenu à partir d'au moins un polymère de base choisi dans le groupe de polypropylènes (PP) ; et de dérivés et/ou composés de ceux-ci ;
le premier composant thermoplastique (1) présente un premier point de fusion ou intervalle de point de fusion, tel que pouvant être déterminé par ACD (analyse calorimétrique différentielle selon DIN EN ISO 11357), qui se situe dans la plage de température de 110 à 140 °C, de préférence d'environ 130 à 136 °C ; et
le au moins un second composant thermoplastique (2) présente un second point de fusion ou intervalle de point de fusion respectif, tel que pouvant être déterminé par ACD (analyse calorimétrique différentielle selon DIN EN ISO 11357), qui se situe dans la plage de température de 156 à 210 °C, de préférence d'environ 160 à 170 °C.

3. Produit moulé par injection (100) d'aspect bicolore ou multicolore selon la revendication 1 ou 2, dans lequel le premier point de fusion ou intervalle de point de fusion et le second point de fusion ou intervalle de point de fusion respectif ne se chevauchent pas, diffèrent notamment d'une température de point de fusion delta respective d'au moins environ 10 °C, de préférence d'environ 20 °C.

4. Produit moulé par injection (100) d'aspect bicolore ou multicolore selon l'une quelconque des revendications précédentes, comprenant le au moins un second composant thermoplastique (2) avec un second pourcentage en masse respectif dans la plage de 0,1 à 5 % en poids, de préférence, de 2 à 3 % en poids.

5. Produit moulé par injection (100) d'aspect bicolore ou multicolore selon l'une quelconque des revendications précédentes, ne comprenant pas de plastifiants.

6. Produit moulé par injection (100) d'aspect bicolore ou multicolore selon l'une quelconque des revendications précédentes, dans lequel, pour créer l'aspect de marbre artificiel ou de bois artificiel :
le premier composant thermoplastique est du polyéthylène haute densité (HDPE) et un mélange maître de la première couleur est fabriqué à d'un support de pigment en polyéthylène (PE) et la seconde couleur est fabriquée à partir d'un support de pigment en polypropylène (PP) ; ou
un mélange maître de la couleur pour le composant thermoplastique de groupe polypropylène (PP) est fabriqué à partir d'un support de pigment en polypropylène (PP) et l'autre couleur pour le composant thermoplastique de groupe polyéthylène (PE) est fabriquée à partir d'un support de pigment en polyéthylène haute densité (HDPE).

7. Produit moulé par injection (100) d'aspect bicolore ou multicolore selon l'une quelconque des revendications précédentes, dans lequel le produit moulé par injection (100) est un conteneur, une palette, une caisse et/ou une cheville de petite ou grande taille pour le stockage et/ou le transport de marchandises.

8. Produit moulé par injection (100) d'aspect bicolore ou multicolore selon l'une quelconque des revendications précédentes, dans lequel le premier composant thermoplastique (1) et/ou le au moins un second composant thermoplastique (2) contiennent :
au moins 90 % d'un matériau recyclé ; et/ou
au moins 5 % d'un matériau maritime.

9. Produit moulé par injection (100) d'aspect bicolore ou multicolore selon l'une quelconque des revendications précédentes **caractérisé en ce qu'**il est résistant au décollage, en particulier dans lequel un ou plusieurs des paramètres de résistance ou des valeurs d'essai de matériau suivants s'appliquent :
- valeur de module de Young d'au moins 800 MPA ;
- valeur de limite d'élasticité d'au moins 20 MPa ;
- valeur de déformation d'élasticité d'au moins 10 % ;
- valeur d'allongement d'au moins 250 %;
- valeur d'essai de résilience Charpy V d'au moins 6 kJ/m²

10. Procédé de fabrication du produit moulé par injection (100) d'aspect bicolore ou multicolore selon l'une quelconque des revendications précédentes 1 à 9, comprenant les étapes suivantes :
- fourniture (S100), dans une zone de trémie d'alimentation initiale (a) d'une machine de moulage par injection, du premier composant thermoplastique (1) et du au moins un second composant thermoplastique (2), respectivement, dans au moins une trémie d'alimentation (22) pour obtenir une composition de matériau thermoplastique ;
- extrusion (S200) de la composition de matière thermoplastique en continu, dans une zone de cylindre chauffée (b) s'étendant entre la zone de trémie d'alimentation (a) et une buse d'injection (26) de la machine de moulage par injection (200), au moyen et le long d'une vis d'extrusion (25) s'étendant longitudinalement, pour qu'elle soit mélangée et plastifiée dans son état fondu ;
- moulage par injection (S300), dans une zone de moulage par injection (c), de la composition de matière thermoplastique mélangée et plastifiée, à travers la buse d'injection (26) dans un moule à injection (29), de manière cyclique en temps opportun ; et
- solidification (S400) en le produit final moulé par injection (100) par refroidissement du moule à injection (29) et déchargement ultérieur, d'une manière cyclique en temps opportun.

11. Procédé de fabrication selon la revendication précédente 10, dans lequel la zone de cylindre chauffée (b) fournit un profil de température de traitement selon une ou plusieurs des caractéristiques suivantes, dans lequel le profil de température de traitement :
- est supérieur à la fois aux premier et second points de fusion ;
- est réglé pour se trouver dans une première partie de la zone de cylindre chauffée (b) à une première plage de température de 160 à 165 °C et/ou dans une partie médiane de la zone de cylindre chauffée (b) à une deuxième plage de température de 165 à 175 °C, et/ou dans une dernière partie de la zone de cylindre chauffée (b) à une troisième plage de température de 175 à 195 °C ;
inclut une température maximale dans une zone de canaux chauds (d) qui est incluse dans la zone de moulage par injection (c), réglée de préférence à une quatrième plage de température de 185 à 195 °C.

12. Procédé de fabrication selon la revendication 10 ou 11, dans lequel la vis d'extrusion (25) est :
- configurée pour fournir une zone de mélange courte, la longueur de la zone de mélange s'étendant au maximum jusqu'à environ 30 %, notamment jusqu'à environ 20 %, de la longueur totale de la vis d'extrusion ; et/ou
- une vis d'extrusion de type barrière.
